# EUROPÄISCHE PATENTSCHRIFT

(11) **EP 3 241 433 B1**
(45) Veröffentlichungstag und Bekanntmachung des Hinweises auf die Patenterteilung: **31.07.2019**
(21) Anmeldenummer: 17167262.9
(22) Anmeldetag: 20.04.2017
(51) Int. Cl.: A01K 31/04, A01K 31/22, A01K 31/16, A01K 31/17

(54) **GEFLÜGELHALTUNGSSYSTEM UND VERFAHREN ZUR FÖRDERUNG VON EIERN IN EINEM GEFLÜGELHALTUNGSSYSTEM**
POULTRY RETENTION SYSTEM AND METHOD FOR CONVEYING EGGS IN A POULTRY RETENTION SYSTEM
SYSTÈME DE MAINTIEN DE VOLAILLE ET PROCÉDÉ DE TRANSPORT D' OEUFS DANS UN SYSTÈME DE MAINTIEN DE VOLAILLE

(30) Priorität: 03.05.2016 DE 202016102333 U
(43) Veröffentlichungstag der Anmeldung: 08.11.2017
(73) Patentinhaber: Big Dutchman International GmbH, 49377 Vechta (DE)
(72) Erfinder: Rayzel, Clovis, Holland, MI 49424 (US)
(74) Vertreter: Eisenführ Speiser

(56) Entgegenhaltungen:
- EP-A1- 2 989 891

## Beschreibung

### Geflügelhaltungssystem und Verfahren zur Förderung von Eiern in einem Geflügelhaltungssystem

Die Erfindung betrifft ein Geflügelhaltungssystem und ein Verfahren zur Förderung von Eiern in einem Geflügelhaltungssystem.

Für die Haltung von Geflügel, insbesondere von Legehennen, sind verschiedene Geflügelhaltungssysteme bekannt. Während in einigen Ländern die Käfighaltung von Geflügel noch erlaubt ist, hat sich in anderen Bereichen beispielsweise die Volierenhaltung durchgesetzt. Eine Voliere zur Haltung von Geflügel ist beispielsweise in der DE 20 2004 003 194 U1 beschrieben. Insbesondere sind Geflügelhaltungssysteme bekannt, bei denen mehrere Geflügelhaltungsvorrichtungen, wie beispielsweise Käfige und/oder Volieren in mehreren Etagen mit jeweils mehreren nebeneinander angeordneten Tieraufenthaltsbereichen angeordnet sind. Derartige Geflügelhaltungssysteme werden üblicherweise in einem Stall oder einer Halle untergebracht, wobei der Stall beispielsweise auch ein Mobilstall sein kann. Zwischen verschiedenen, vorzugsweise mehretagigen, Reihen von Geflügelhaltungsvorrichtungen sind vorzugsweise, in der Regel parallel verlaufende, Gänge ausgebildet. EP 2 989 891 A1 offenbart ein Legehennest für Geflügel. Legt ein Vogel ein Ei, fällt das Ei auf den Boden. Durch die Neigung des Bodens rollt das Ei zur Abwurföffnung und kann dann z.B. über ein geeignetes Förderband abtransportiert werden. Geflügelhaltungssysteme können als offene Systeme ausgebildet sein, sodass sich die Tiere nicht nur innerhalb einzelner Tieraufenthaltsbereiche oder innerhalb einer Etage, sondern auch im Stall bzw. der Halle frei bewegen können. Meist ist der Stallboden, insbesondere in den Gängen, dann als Scharrraum, vorzugsweise mit Einstreu bedeckt,
für die Tiere ausgebildet. Diese Art der Geflügelhaltung ist jedoch insofern nachteilig, als die Tiere freien Kontakt mit Flächen und/oder Elementen haben, die außerhalb der Tieraufenthaltsbereiche in den Geflügelhaltungsvorrichtungen liegen, und diese verschmutzen, unter anderem mit Kot. Insbesondere in der Legehennenhaltung kann es durch eine freie Beweglichkeit der Tiere auch zur Verschmutzung und/oder Beschädigung von Eiern kommen. Die Verschmutzung von Fördervorrichtungen, die für den Abtransport von Eiern aus dem Geflügelhaltungssystem vorgesehen sind, kann ferner dazu führen, dass die Eier nicht mehr oder nur verzögert aus dem Tieraufenthaltsbereich zu den Fördereinrichtungen hin abrollen und abtransportiert werden, was wiederum die Wahrscheinlichkeit erhöht, dass die Tiere die Eier verschmutzen und/oder beschädigen.

Der Erfindung liegt daher die Aufgabe zugrunde, ein Geflügelhaltungssystem und ein Verfahren zur Förderung von Eiern in einem Geflügelhaltungssystem bereitzustellen, welche eine oder mehrere der genannten Nachteile vermindern oder beseitigen. Insbesondere ist es eine Aufgabe der vorliegenden Erfindung, ein Geflügelhaltungssystem und ein Verfahren zur Förderung von Eiern in einem Geflügelhaltungssystem bereitzustellen, welche platz- und/oder kostensparend eine Verschmutzung und/oder Beschädigung der Eier reduzieren und/oder die Stallhygiene verbessern.

Diese Aufgabe wird gelöst durch ein Geflügelhaltungssystem, umfassend mindestens einen Tieraufenthaltsbereich mit einem Aufenthaltsboden, eine Fördervorrichtung umfassend ein Förderband mit einem Obergurt und einem Untergurt, dadurch gekennzeichnet, dass der Untergurt angeordnet und ausgebildet ist zur Aufnahme von Eiern aus dem Tieraufenthaltsbereich.

Gemäß der Erfindung umfasst das Geflügelhaltungssystem neben mindestens einem Tieraufenthaltsbereich mit einem Aufenthaltsboden eine Fördervorrichtung, die als Bandförderer mit einem, vorzugweise endlosen, Förderband mit einem Obergurt und einem Untergurt ausgebildet ist. Eine solche Fördervorrichtung wird auch als Endlosförderer bezeichnet. Die Fördervorrichtung umfasst in der Regel vorzugsweise ferner ein Umlenkelement und/oder ein Antriebselement, die beispielsweise als Umlenkungsrolle und/oder Antriebsrolle ausgebildet sind. Das Antriebselement dient vorzugsweise dem Antreiben des Förderbands. Der Obergurt kann auch als Obertrum bezeichnet werden. Der Untergurt kann auch als Untertrum bezeichnet werden. Unterhalb des Obergurts und/oder unterhalb des Untergurts können Stützelemente, wie beispielsweise Stützrollen angeordnet sein.

Die Fördervorrichtung verläuft vorzugsweise parallel zu einer Reihe von Geflügelhaltungsvorrichtungen, insbesondere parallel zu einem Gang zwischen verschiedenen Reihen von Geflügelhaltungsvorrichtungen. Der Aufenthaltsboden mindestens eines Tieraufenthaltsbereichs ist vorzugsweise geneigt, insbesondere nach unten zur Fördervorrichtung hin. Der Tieraufenthaltsbereich umfasst vorzugsweise einen Nestbereich, der so ausgestaltet und angeordnet ist, dass er für die Tiere eine angenehme Umgebung bietet, insbesondere zum Legen der Eier. Ferner vorzugsweise umfasst der Tieraufenthaltsbereich eine Sitzstange und/oder eine Futterversorgung und/oder eine Wasserversorgung und/oder weitere, für eine artgerechte Geflügelhaltung erforderliche Einrichtungen.

Die Fördervorrichtung des Geflügelhaltungssystems ist derart angeordnet und ausgebildet, dass der Untergurt Eier aus dem Tieraufenthaltsbereich aufnehmen kann.

Bevorzugt ist ferner, dass die Eier mittels des Untergurts der Fördervorrichtung in eine Untergurtförderrichtung transportiert und ferner vorzugsweise an eine anschließende Zwischenförderanlage oder direkt an eine die Eier weiterverarbeitende Anlage abgegeben werden. Die Obergurtförderrichtung und die Untergurtförderrichtung sind vorzugsweise einander entgegengesetzt.

Die Erfindung beruht unter anderem auf der Erkenntnis, dass die Tiere häufig von einem Scharrraum zwischen den meist in Reihen angeordneten Tieraufenthaltsbereichen und den Tieraufenthaltsbereichen selbst hin und wieder zurück wechseln und dabei häufig eine dazwischenliegende Fördervorrichtung für Eier überqueren.

Durch die erfindungsgemäße Nutzung des Untergurts der Fördervorrichtung für die Aufnahme, und vorzugsweise den Transport, der Eier ist durch den darüber liegenden Obergurt gleichzeitig eine Abdeckung der Eier gegeben. Auf diese Weise kann in der Regel verhindert oder zumindest deutlich reduziert werden, dass die Tiere beim Überqueren der Fördervorrichtung auf die auf dem Untergurt befindlichen Eier treten und diese dabei beschädigen, da der Zugang zu den auf dem Untergurt befindlichen Eiern durch den Obergurt verwehrt oder zumindest erschwert ist. Ferner hat die Nutzung des Untergurts zur Aufnahme der Eier aus dem Tieraufenthaltsbereich den Vorteil, dass der Obergurt eine Verschmutzung der auf dem Untergurt befindlichen Eier deutlich reduziert.

In einer bevorzugten Fortbildung ist vorgesehen, dass der Obergurt angeordnet und ausgebildet ist zur Aufnahme von Geflügelkot. Vorzugsweise kann der Geflügelkot mittels des Obergurts in eine Obergurtförderrichtung transportiert und ferner vorzugsweise an eine anschließende Zwischenförderanlage oder direkt an eine Kot verarbeitende Anlage, wie beispielsweise einen Kottrocknungstunnel, abgegeben werden. Diese Fortbildungsform hat den Vorteil einer besonders kompakten Bauweise sowie einer platz- und kostensparenden Lösung, da die gleiche Fördervorrichtung sowohl zur Aufnahme von Geflügelkot als auch zur Aufnahme von Eiern genutzt werden kann.

Gegenüber statischen, flächigen Abdeckungen eines Förderbands für Eier durch beispielsweise Blechprofile, Holz- oder Kunststoffplatten hat die Nutzung des Obergurts als Kotband den Vorteil, dass anfallender Schmutz, wie beispielsweise Kot, regelmäßig abtransportiert werden kann. Auf statischen Abdeckflächen hingegen können sich im Laufe einer Legeperiode starke Verschmutzungen ansammeln und zu größeren Schmutzplatten zusammenwachsen, die, sofern sie sich von der Abdeckung lösen und beispielsweise in einen Bereich gelangen, über den die Eier aus dem Tieraufenthaltsbereich üblicherweise auf ein Förderband für Eier rollen, genau diesen Abtransport verhindern oder erschweren und/oder verlangsamen können. Als Folge davon kann es vorkommen, dass die Tiere auf die sich ansammelnden Eier treten und so die Eier beschädigen und/oder die Eier stärker verschmutzen.

Die Erfindung beruht ferner auf der Kenntnis, dass auch die Hygiene einer großflächigen, statischen Abdeckung für die Gesundheit der Tiere nachteilig sein kann, da sich Kot auf der Abdeckung ansammeln kann und die Tiere, insbesondere beim Überqueren, damit immer wieder in Berührung kommen, was insbesondere die Fußballengesundheit beeinträchtigen kann.

Durch die Nutzung des Obergurts der Fördervorrichtung sowohl als Abdeckung für den Untergurt, der die Eier aufnimmt, als auch als Kotband, mit dem Kot und/oder andere Verschmutzungen aufgenommen und vorzugweise abtransportiert werden können, kann die Hygiene im Stall deutlich verbessert werden.

Vorzugsweise ist auf einer dem Tieraufenthaltsbereich abgewandten Seite des Untergurts eine Seitenwand angeordnet. Insbesondere in diesem Fall kann der die Eier aufnehmende Untergurt auch als Eierkanal bezeichnet werden. Die Seitenwand kann vorzugsweise durchgängig oder unterbrochen, beispielsweise mit Löchern bzw. Ausnehmungen, ausgebildet sein. Die Unterbrechungen in einer Seitenwand sind vorzugsweise derart dimensioniert, dass Eier nicht hindurch treten können. Die Seitenwand kann beispielsweise als Gitterelement ausgebildet sein, etwa als ein Gitter, bei dem Streben in eine Richtung (beispielsweise horizontal oder vertikal) voneinander beanstandet verlaufen, oder als ein Gitter, bei dem Streben in zwei oder mehr Richtungen voneinander beanstandet verlaufen. Ein solches Gitter kann beispielsweise als Kreuzgitter ausgebildet sein.

In einer weiteren bevorzugten Ausgestaltung ist unterhalb des Untergurts ein Unterstützungselement angeordnet. Dieses Unterstützungselement dient vorzugsweise dazu, auch bei hoher Beladung bzw. Belastung des Untergurts eine unerwünscht hohe Durchbiegung bzw. ein unerwünscht hohes Durchhängen des Untergurts zu vermeiden. Auch das Unterstützungselement ist vorzugsweise als Gitterelement ausgebildet.

In einer besonders bevorzugten Fortbildungsform sind die Seitenwand und/oder das Unterstützungselement und/oder der Aufenthaltsboden miteinander verbunden und/oder einstückig ausgebildet. Beispielsweise kann ein, vorzugsweise gitterförmiger, Aufenthaltsboden so dimensioniert bzw. verlängert werden, dass die Verlängerung das Unterstützungselement und/oder die Seitenwand bildet.

Besonders bevorzugt ist ferner, dass der Untergurt auf Höhe des Aufenthaltsbodens oder darunter angeordnet ist. Insbesondere kann der Untergurt auf Höhe des Endes des Aufenthaltsbodens, das der Fördervorrichtung zugewandt bzw. benachbart dazu ist, oder darunter angeordnet sein.

Eine weitere bevorzugte Ausgestaltung ist dadurch gekennzeichnet, dass ein, vorzugsweise maximaler und/oder lichter, Abstand in im Wesentlichen vertikaler Richtung zwischen dem Obergurt und dem Untergurt maximal einem Dreifachen eines durchschnittlichen Eidurchmessers entspricht, vorzugsweise maximal einem Doppelten eines durchschnittlichen Eidurchmessers. Ein Eidurchmesser wird hier vorzugsweise verstanden als ein, vorzugweise maximaler, Durchschnitt des Eies in einer im Wesentlichen vertikalen Richtung in einer liegenden Position des Eis. Als durchschnittlicher Eidurchmesser wird hier vorzugsweise ein Eidurchmesser verstanden, der dem rechnerischen Durchschnitt einer Vielzahl von Eidurchmessern entspricht.

Diese Ausgestaltung hat den Vorteil, dass der Abstand zwischen dem Untergurt und dem Obergurt der Fördervorrichtung so bemessen ist, dass die Eier im Wesentlichen ohne Beschädigungen in den Zwischenraum zwischen Untergurt und Obergurt gelangen und vorzugsweise transportiert werden können, die Tiere jedoch daran gehindert sind, in diesen Zwischenraum und/oder auf den Untergurt zu gelangen.

In einer weiteren Fortbildungsform ist bevorzugt, dass oberhalb des Obergurts ein Geflügelaufenthaltselement angeordnet ist, wobei das Geflügelaufenthaltselement zumindest abschnittsweise derart angeordnet und ausgebildet ist, dass Geflügelkot auf den Obergurt gelangen kann. Das Geflügelaufenthaltselement ist vorzugsweise für Geflügelkot zumindest abschnittsweise und/oder zumindest teilweise durchlässig. Gleichzeitig ist das Geflügelaufenthaltselement vorzugsweise derart ausgebildet und angeordnet, dass die Tiere sich darauf aufhalten können und/oder über das Geflügelaufenthaltselement die Fördervorrichtung überqueren können. Vorzugsweise ist das Geflügelaufenthaltselement in vertikaler Richtung beanstandet von dem Obergurt angeordnet, wobei dieser Abstand vorzugsweise geeignet ist, den Schmutz von zwei aufeinander folgenden Tagen aufzunehmen, ohne dass der Kot und/oder Verschmutzungen in das Geflügelaufenthaltselement hineinragt und die Tiere in direkten Kontakt mit ihren Exkrementen kommen können. Ferner vorzugsweise ist das Geflügelaufenthaltselement, insbesondere ganz oder abschnittsweise, als Gitterelement und/oder als Sitzstange ausgebildet.

Diese Ausgestaltung hat den Vorteil, dass Kot und/oder Verschmutzungen zum Großteil durch das Geflügelaufenthaltselement hindurch auf den Obergurt gelangen. Auf diese Weise bleibt das Geflügelaufenthaltselement vergleichsweise sauber, was die Stallhygiene und insbesondere die Fußballengesundheit verbessern kann.

In einer bevorzugten Fortbildungsform ist der Obergurt und/oder das Geflügelaufenthaltselement oberhalb des Aufenthaltsbodens angeordnet.

Eine weitere bevorzugte Ausgestaltung umfasst ein Leitelement, das ausgebildet und angeordnet ist, auf dem Untergurt beförderte Eier aus der Fördervorrichtung heraus zu befördern. Anders als bei einem Transport auf dem Obergurt müssen auf dem Untergurt beförderte Eier aus dem Zwischenraum zwischen Obergurt und Untergurt heraus befördert werden, bevor der Untergurt über das Umlenkelement und/oder ein Antriebselement nach oben umgelenkt und zum Obergurt wird. Dies geschieht in dieser Ausgestaltung über ein Leitelement, das entsprechend ausgebildet und angeordnet ist, die Eier aus dem Zwischenraum zwischen dem Untergurt und dem Obergurt heraus zu befördern.

Das Leitelement kann vorzugsweise durchgängig oder unterbrochen, beispielsweise mit Löchern bzw. Ausnehmungen, ausgebildet sein. Die Unterbrechungen in einem Leitelement sind vorzugsweise derart dimensioniert, dass Eier nicht hindurch treten können. Das Leitelement kann beispielsweise als Gitterelement ausgebildet sein, etwa als ein Gitter, bei dem Streben in eine Richtung (beispielsweise horizontal oder vertikal) voneinander beanstandet verlaufen, oder als ein Gitter, bei dem Streben in zwei oder mehr Richtungen voneinander beanstandet verlaufen. Ein solches Gitter kann beispielsweise als Kreuzgitter ausgebildet sein.

Das Leitelement ist in Untergurtförderrichtung vorzugsweise in einem Winkel zu dieser Untergurtförderrichtung angeordnet. Vorzugsweise ist das Leitelement derart angeordnet und ausgebildet, dass auf dem Untergurt beförderte Eier seitlich, unter einem Winkel zur Untergurtförderrichtung heraus befördert werden. Ferner vorzugsweise ist das Leitelement derart angeordnet und ausgebildet, dass die Eier in einer Ebene des Untergurts aus der Fördervorrichtung heraus befördert werden.

Das Leitelement ist ferner vorzugsweise in einem Übergabeabschnitt der Fördervorrichtung angeordnet, der vorzugsweise an einem in Untergurtförderrichtung stromabwärts gelegenen Ende des Untergurts angeordnet ist.

In einer weiteren bevorzugten Ausgestaltung umfasst das Geflügelhaltungssystem einen Zwischenförderer, der angeordnet und ausgebildet ist, aus der Fördervorrichtung heraus beförderte Eier aufzunehmen. Der Zwischenförderer kann vorzugsweise derart angeordnet sein, dass er an den Übergabeabschnitt der Fördervorrichtung anschließt, vorzugsweise in einer im Wesentlichen orthogonalen Richtung zur Untergurtförderrichtung. Der Zwischenförderer ist ferner vorzugsweise ausgebildet, die von der Fördervorrichtung aufgenommenen Eier zu befördern und/oder an eine Anschlussfördervorrichtung abzugeben.

Der Zwischenförderer weist vorzugsweise eine Förderrichtung auf, die im Wesentlichen parallel zur Untergurtförderrichtung ist. Ferner vorzugsweise ist der Zwischenförderer derart angeordnet und ausgebildet, dass sich der Zwischenförderer in Untergurtförderrichtung über die Fördervorrichtung hinaus erstreckt.

Der Zwischenförderer kann vorzugsweise ein, insbesondere endloses, Zwischenförderband mit einem Obergurt und einem Untergurt aufweisen, also als Bandförderer sein, und/oder als Stabförderer ausgebildet sein. Vorzugweise weist der Zwischenförderer ein Umlenkelement ausgebildet sein. Vorzugweise weist der Zwischenförderer ein Umlenkelement und/oder ein Antriebselement und/oder Stützelemente zur Unterstützung des Obergurts und/oder des Untergurts des Zwischenförderers auf.

In einer weiteren bevorzugten Ausgestaltung ist vorgesehen, dass der Obergurt des Zwischenförderers vorzugsweise im Wesentlichen auf gleicher Höhe oder leicht unterhalb angeordnet ist wie der Untergurt der Fördervorrichtung
In dieser Ausgestaltung ist vorzugweise vorgesehen, dass auf dem Untergurt der Fördervorrichtung beförderte Eier auf den Obergurt des Zwischenförderers übergeben werden, vorzugsweise mittels des Leitelements. Die Förderrichtung des Zwischenförderers entspricht vorzugsweise der Obergurtförderrichtung des Zwischenförderers, da der Zwischenförderer vorzugsweise angeordnet und ausgebildet ist für eine Beförderung der Eier auf dem Obergurt. Hierzu bietet sich eine Anordnung des Obergurts des Zwischenförderers vorzugsweise im Wesentlichen auf gleicher Höhe wie der Untergurt der Fördervorrichtung oder leicht unterhalb des Untergurts der Fördervorrichtung an.

In einer weiteren bevorzugten Ausgestaltung ist vorgesehen, dass ein Abstand zwischen dem Zwischenförderer und der Fördervorrichtung, vorzugsweise ein Abstand zwischen dem Obergurt des Zwischenförderers und dem Untergurt der Fördervorrichtung, kleiner ist als ein durchschnittlicher Eidurchmesser, vorzugsweise kleiner als 50%, insbesondere kleiner als 20%, eines durchschnittlichen Eidurchmessers.

Ferner ist es vorteilhaft, den Abstand zwischen dem Zwischenförderer und der Fördervorrichtung, insbesondere den Abstand zwischen dem Obergurt des Zwischenförderers und dem Untergurt der Fördervorrichtung so zu dimensionieren, dass Eier ganz oder teilweise nicht hindurch treten können, sodass das Risiko, dass Eier herunterfallen und/oder steckenbleiben, reduziert werden kann.

In einer weiteren bevorzugten Ausgestaltung ist vorgesehen, dass der Zwischenförderer und/oder eine Anschlussfördervorrichtung direkt oder leicht unterhalb des Untergurtes der Fördervorrichtung angeordnet ist und seitlich über diesen hinausragt, vorzugsweise an einer Seite herausragt.

Ein Zwischenförderer und/oder eine Anschlussfördervorrichtung kann auch so unterhalb des Untergurts angeordnet sein, dass Eier vom Untergurt der Fördervorrichtung seitlich auf den Zwischenförderer und/oder die Anschlussfördervorrichtung abgegeben werden können. Hierzu ist der Zwischenförderer und/oder die Anschlussfördervorrichtung vorzugsweise in einer Richtung orthogonal zur Untergurtförderrichtung breiter als der Untergurt und/oder benachbart zum Untergurt angeordnet. Vorzugsweise ist ein Abstand in horizontaler Richtung zwischen dem Zwischenförderer und/oder der Anschlussfördervorrichtung nicht vorhanden oder so klein, dass Eier nicht hindurch treten bzw. in diesem Abstand bzw. Zwischenraum stecken bleiben können.

Das Förderband kann vorzugsweise als textiles Förderband ausgebildet sein, das beispielsweise gewebt sein kann. Vorzugsweise ist das Förderband als Gewebeband ausgebildet.

Das Förderband besteht vorzugsweise aus Kunststoff oder weist vorzugsweise Kunststoff auf. Insbesondere ein thermoplastischer Kunststoff, wie beispielsweise Polypropylen, ist für das Förderband bevorzugt.

Das Förderband weist vorzugsweise eine Breite von mindestens 10 cm, insbesondere von mindestens 20 cm, 25 cm, oder 30 cm auf.

In einer weiteren bevorzugten Ausgestaltung ist vorgesehen, dass eine erste Seite des Förderbands, die eine Oberseite des Obergurts bildet, anders ausgebildet ist als eine zweite Seite des Förderbands, die eine Oberseite des Untergurts bzw. eine Unterseite des Obergurts bildet. Vorzugsweise ist die erste Seite des Förderbands im Wesentlichen glatt und/oder wasserabweisend und/oder Schmutz abweisend und/oder reinigungsmittelfest ausgebildet. Die erste Seite des Förderbands kann beispielsweise entsprechend beschichtet sein, etwa mit einer Kunststoffbeschichtung. Die zweite Seite des Förderbands kann beispielsweise eine Struktur aufweisen, welche eine Bewegung der Eier relativ zum Förderband beim Fördern in Untergurtförderrichtung reduziert.

Beispielsweise kann das Förderband als Gewebeband ausgebildet sein, das auf seiner ersten Seite eine Beschichtung aufweist, die insbesondere für die Beförderung von Kot ausgebildet ist.

Das Förderband ist vorzugsweise im Wesentlichen durchgängig, ohne das Förderband durchdringende Öffnungen, insbesondere nicht in einem der Förderung von Eiern und/oder Kot dienenden Bereich, ausgebildet. Auf diese Weise kann eine Ablagerung von Kot und/oder Verschmutzungen auf der zweiten Seite des Förderbands verringert oder vermieden werden.

Gemäß einem weiteren Aspekt der Erfindung wird die eingangs genannte Aufgabe gelöst durch ein Verfahren zur Förderung von Eiern in einem Geflügelhaltungssystem, insbesondere in einem Geflügelhaltungssystem wie zuvor beschrieben, umfassend vorzugsweise Bereitstellen eines Geflügelhaltungssystems wie zuvor beschrieben, Fördern von Eiern aus einem Tieraufenthaltsbereich auf einem Untergurt eines Förderbands einer Fördervorrichtung in eine Untergurtförderrichtung, und ferner vorzugsweise Fördern von Geflügelkot auf einem Obergurt eines Förderbands einer Fördervorrichtung in eine Obergurtförderrichtung.

Das erfindungsgemäße Verfahren und seine möglichen Fortbildungen weisen Merkmale bzw. Verfahrensschritte auf, die sie insbesondere dafür geeignet machen, für ein erfindungsgemäßes Geflügelhaltungssystem und seine Fortbildungen verwendet zu werden.

Zu den Vorteilen, Ausführungsvarianten und Ausführungsdetails dieses weiteren Aspekts der Erfindung und seiner möglichen Fortbildungen wird auf die vorangegangene Beschreibung zu den entsprechenden Vorrichtungsmerkmalen verwiesen.

Gemäß einem weiteren Aspekt der Erfindung wird die eingangs genannte Aufgabe gelöst durch die Verwendung einer Fördervorrichtung umfassend ein Förderband mit einem Obergurt und einem Untergurt zur Förderung von Eiern in einem Geflügelhaltungssystem, insbesondere in einem Geflügelhaltungssystem wie zuvor beschrieben, wobei der Untergurt der Fördervorrichtung angeordnet und ausgebildet ist zur Aufnahme von Eiern aus dem Tieraufenthaltsbereich.

Zu den Vorteilen, Ausführungsvarianten und Ausführungsdetails dieses weiteren Aspekts der Erfindung und seiner möglichen Fortbildungen wird auf die vorangegangene Beschreibung zu den entsprechenden Vorrichtungsmerkmalen verwiesen.

Beispielhaft Ausführungsformen der Erfindung werden anhand der beiliegenden Figuren beschrieben. Es zeigen:
- Figur 1:: eine dreidimensionale Ansicht einer beispielhaften Ausführungsform eines Teils eines Geflügelhaltungssystems;
- Figur 2:: einen Querschnitt durch den Teil des Geflügelhaltungssystems gemäß Figur 1;
- Figur 3:: ein vergrößertes Detail aus Figur 2;
- Figur 4:: eine dreidimensionale Ansicht einer beispielhaften Ausführungsform eines Zwischenförderers;
- Figur 5:: eine Draufsicht auf den Zwischenförderer gemäß Figur 4; und
- Figur 6:: eine dreidimensionale Ansicht einer weiteren beispielhaften Ausführungsform eines Übergabeabschnitts mit direkter Übergabe an eine Anschlussfördervorrichtung.

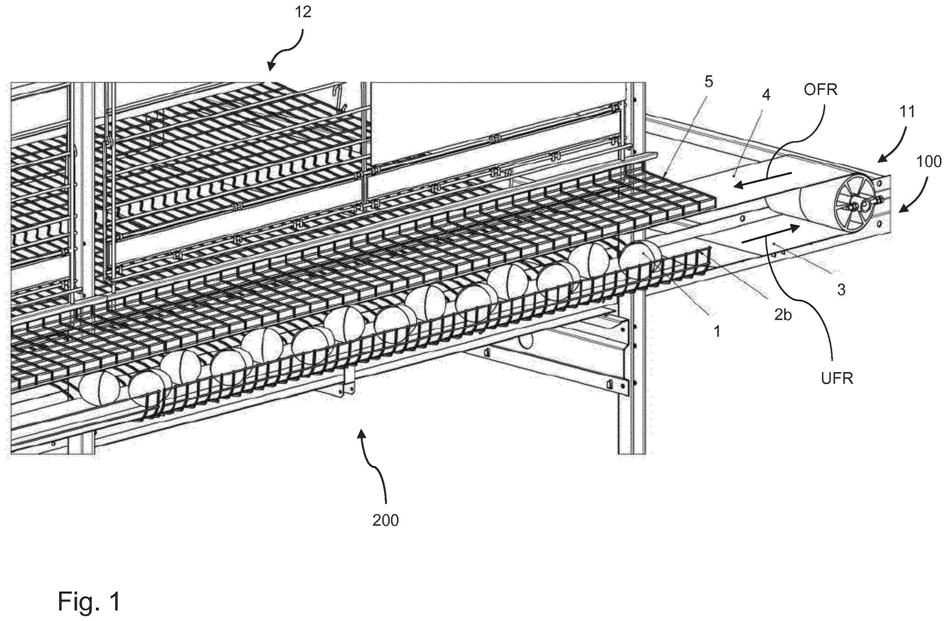

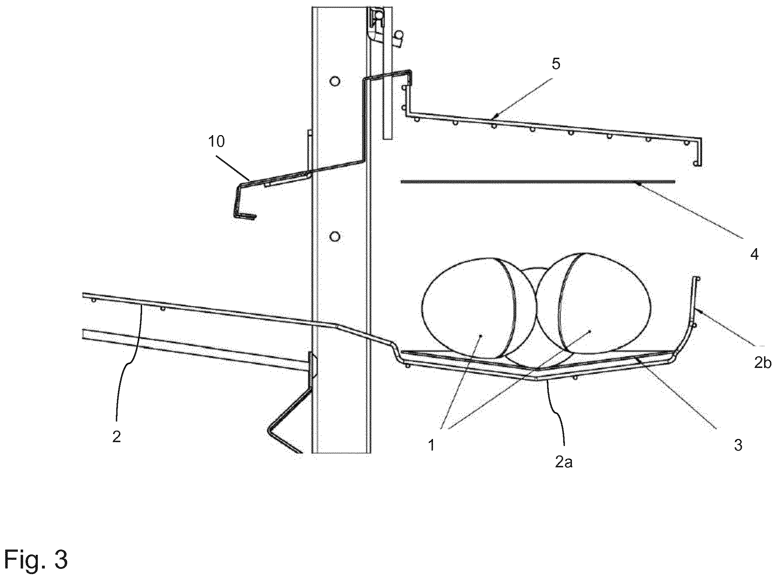

In den Figuren 1-3 ist ein Teil eines Geflügelhaltungssystems 200 mit mehreren Tieraufenthaltsbereichen 12 mit einem Aufenthaltsboden und einer Fördervorrichtung 100 dargestellt.

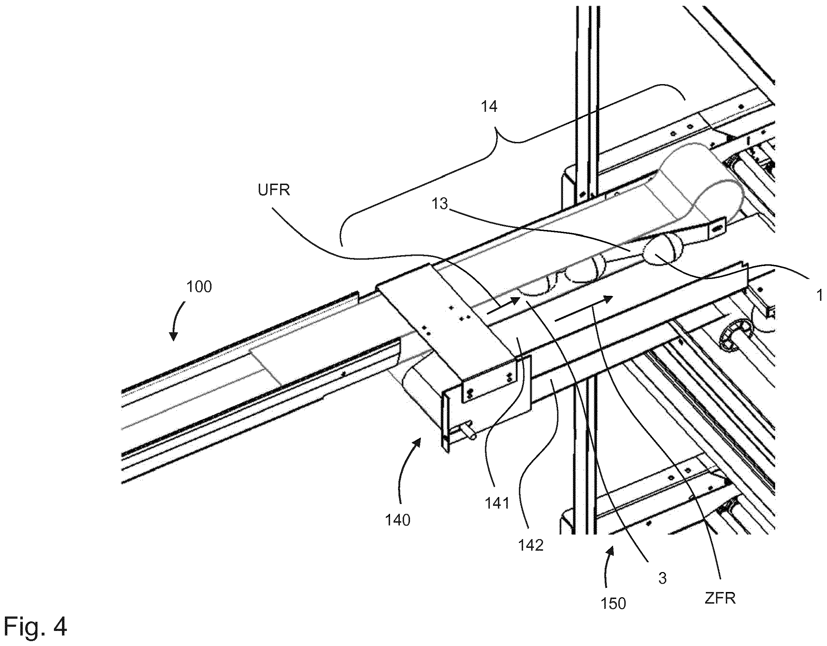

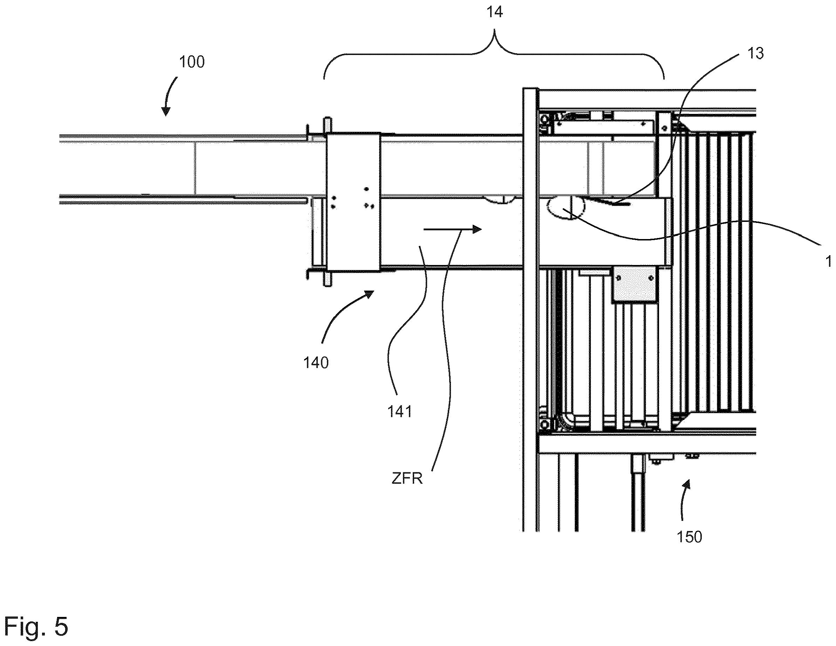

In den Figuren 4 und 5 ist eine Fördervorrichtung 100 dargestellt und zwar mit ihrem in Untergurtförderrichtung UFR stromabwärts gelegenen Ende, an dem ein Übergabeabschnitt 14 angeordnet ist. Daran anschließend ist in den Figuren 4 und 5 ein Zwischenförderer 140 gezeigt, der für den Transport der Eier 1 von der Fördervorrichtung 100 an eine Anschlussfördervorrichtung 150 sorgt.

Gleiche bzw. im Wesentlichen funktionsgleiche Elemente sind in den Figuren mit den gleichen Bezugszeichen bezeichnet.

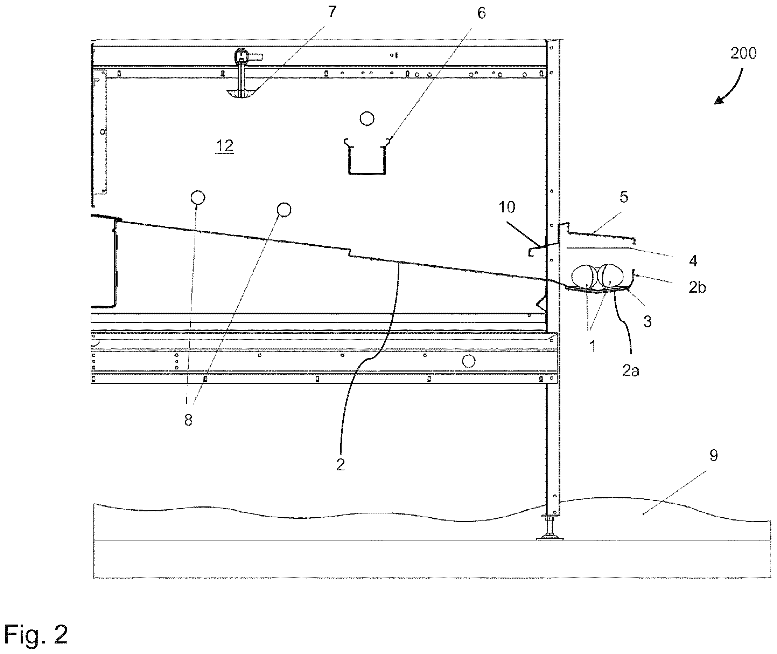

Wie in Figur 1 ansatzweise zu erkennen ist, können mehrere Tieraufenthaltsbereiche 12 in einer Reihe nebeneinander angeordnet sein, mit einer parallel dazu verlaufenden Fördervorrichtung 100. Wie in Figur 2 zu erkennen ist, ist die hier dargestellte Ausführungsform eines Geflügelhaltungssystems 200 lediglich einetagig aufgebaut. Eine mehretagige der Anordnung von Tieraufenthaltsbereichen 12 übereinander ist jedoch entsprechend möglich. Auf dem Stallboden ist ein Scharrraum 9 ausgebildet, der vorzugsweise mit Einstreu bedeckt ist.

Die Fördervorrichtung 100 weist einen Obergurt 4 und einem Untergurt 3 auf. Auf dem Untergurt 3 werden Eier 1 befördert, und zwar in einer der Obergurtförderrichtung OFR entgegengesetzten Untergurtförderrichtung UFR. Am Ende der Fördervorrichtung 100 ist zwischen dem Untergurt 3 und dem Obergurt 4 ein Umlenk- und/oder Antriebselement 11 angeordnet.

Wie insbesondere in Figur 2 zu erkennen ist, sind im Tieraufenthaltsbereich 12 Sitzstangen 8, eine Futterversorgung 6 und eine Wasserversorgung 7 angeordnet.

Auf einer dem Tieraufenthaltsbereich 12 abgewandten Seite des Untergurts 3 ist eine Seitenwand 2b angeordnet. Ferner ist unterhalb des Untergurts 3 ein Unterstützungselement 2a angeordnet. Die Seitenwand 2b und das Unterstützungselement 2a sind als Gitterelement, hier als Kreuzgitter, und einstückig mit dem Aufenthaltsboden 2 ausgebildet. Die Seitenwand 2b dient insbesondere dazu, zu verhindern, dass aus dem (wie insbesondere in Figur 2 zu erkennen) schräg abfallenden Aufenthaltsboden 2 auf den Untergurt 3 rollende Eier 1 aus dem Eierkanal herausrollen.

Wie ferner insbesondere in Figur 2 zu erkennen ist, ist der Untergurt 3 etwas unterhalb der Höhe des Aufenthaltsbodens 2 angeordnet, insbesondere leicht unterhalb des Endes des Aufenthaltsbodens 2, das der Fördervorrichtung 100 zugewandt bzw. benachbart dazu ist. Der maximale, lichte Abstand in im Wesentlichen vertikaler Richtung zwischen dem Obergurt 4 und dem Untergurt 3 entspricht vorzugsweise maximal einem Dreifachen eines durchschnittlichen Eidurchmessers, vorzugsweise maximal einem Doppelten des durchschnittlichen Eidurchmessers.

Wenn die Tiere den Tieraufenthaltsbereich 12 verlassen oder in ihn eintreten möchten, müssen sie hierzu in der Regel die Fördervorrichtung 100 überqueren. Hierzu ist ein Geflügelaufenthaltselement 5 vorgesehen, welches in der in den Figuren 1-3 dargestellten Ausführungsform des Geflügelhaltungssystems 200 als Gitterelement, insbesondere als Kreuzgitter, ausgebildet ist. Das Geflügelaufenthaltselement 5 ist derart ausgebildet, dass Geflügelkot auf den Obergurt 4 gelangen kann. Das Gitterelement des Geflügelaufenthaltselements 5 bleibt auf diese Weise relativ sauber und hygienisch, dass der Fußballengesundheit der Tiere zugutekommt. Ferner ist das Geflügelaufenthaltselement 5 zum Tieraufenthaltsbereich 12 hin mit einem Trittelement 10 versehen, welches den Tieren den einen Austritt aus dem Tieraufenthaltsbereich 12 über das Geflügelaufenthaltselement 5 erleichtert.

Auf dem Geflügelaufenthaltselement 5 befindlicher Kot kann in Obergurtförderrichtung befördert und beispielsweise (direkt oder indirekt) an einen Kottrocknungstunnel abgegeben werden.

Wie in den Figuren 4 und 5 dargestellt, werden am in Untergurtförderrichtung UFR stromabwärts gelegenen Ende der Fördervorrichtung 100 die Eier 1 in einem Übergabeabschnitt 14 an einen Zwischenförderer 140 übergeben. Dies geschieht mittels eines Leitelements 13, das ausgebildet angeordnet ist, auf dem Untergurt 3 beförderte Eier 1 aus der Fördervorrichtung 100 heraus zu befördern. Der Zwischenförderer 140 ist als Endlosförderer mit einem Obergurt 141 und einem Untergurt 142 ausgebildet. Der Obergurt 141 des Zwischenförderers 140 liegt im Wesentlichen auf gleicher Höhe wie der Untergurt 3 der Fördervorrichtung 100. Auf diese Weise können mit dem Leitelement 13 die Eier 1 seitlich, in einem Winkel zur Untergurtförderrichtung UFR, vom Untergurt 3 der Fördervorrichtung 100 auf den Obergurt 141 des Zwischenförderers 140 gelangen. Vom Zwischenförderer 140 gelangen die Eier 1 dann auf eine Anschlussfördervorrichtung 150, mit der die Eier 1 ihrer weiteren Verwendung bzw. Verarbeitung zugeführt werden können.

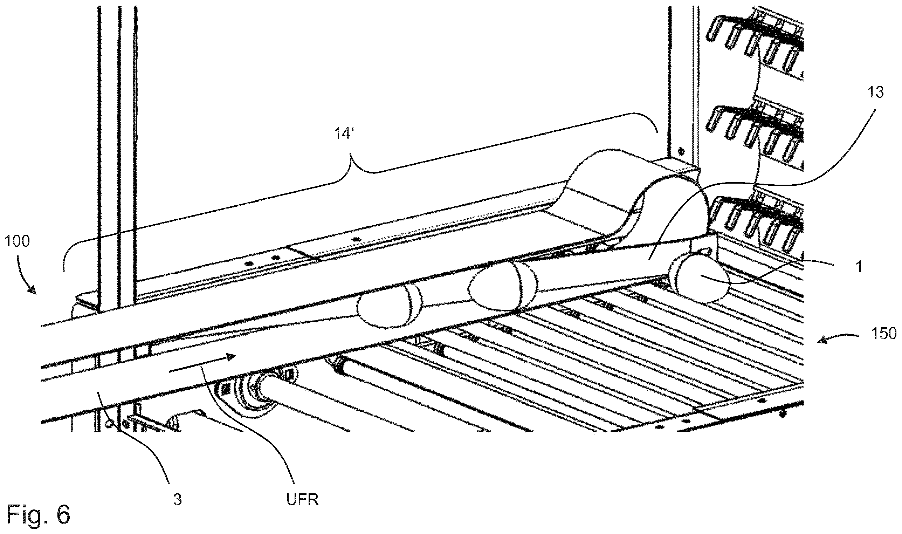

In Figur 6 ist eine Variante dargestellt, in der von der Fördervorrichtung 100 Eier 1 seitlich zur Untergurtförderrichtung UFR mittels des Leitelements 13 direkt auf eine Anschlussfördervorrichtung 150 übergeben werden, die direkt oder leicht unterhalb des Untergurts 3 angeordnet ist. Auf diese Weise kann auf einen Zwischenförderer verzichtet werden. Die Anschlussfördervorrichtung 150 ist in Richtung orthogonal zu Untergurtförderrichtung UFR, insbesondere in horizontaler Richtung, breiter als der Untergurt 3 und ragt seitlich über diesen hinaus. Vorteilhaft für eine reibungslose Übergabe der Eier 1 im Übergabeabschnitt 14' ist insbesondere, dass in horizontaler Richtung zwischen der Anschlussfördervorrichtung 150 und dem Untergurt 3 wie in Figur 6 gezeigt kein Abstand existiert oder, beispielsweise wenn eine Anschlussfördervorrichtung oder ein Zwischenförderer benachbart zum Untergurt 3 angeordnet sind, ein horizontaler Abstand zwischen der Anschlussfördervorrichtung oder dem Zwischenförderer und dem Untergurt 3 so dimensioniert ist, dass keine Eier hindurch treten oder in diesem Zwischenraum stecken bleiben können.

Die Nutzung des Untergurts 3 der Fördervorrichtung 100 zur Aufnahme und zum Transport von Eiern 1 und die Nutzung des Obergurts 4 der Fördervorrichtung 100 zur Aufnahme und zum Transport von Kot haben mehrere Vorteile. Zum einen schützt der Obergurt 4 die auf dem Untergurt 3 beförderten Eier vor Verschmutzung und/oder Beschädigungen. Ferner kann auf dem Obergurt 4 befindlicher Kot regelmäßig abtransportiert werden, was die Stallhygiene verbessert. Insgesamt ergibt sich eine kompakte Bauweise sowie eine kostensparende und die Stallhygiene verbessernde Konstruktion.

## Patentansprüche

1. Geflügelhaltungssystem (200), umfassend
- mindestens einen Tieraufenthaltsbereich (12) mit einem Aufenthaltsboden (2),
- eine Fördervorrichtung (100) umfassend ein Förderband mit einem Obergurt (4) und einem Untergurt (3),
- **dadurch gekennzeichnet, dass** der Untergurt (3)angeordnet und ausgebildet ist zur Aufnahme von Eiern (1)aus dem Tieraufenthaltsbereich (12).

2. Geflügelhaltungssystem (200) nach dem vorhergehenden Anspruch,
**dadurch gekennzeichnet, dass** der Obergurt (4) angeordnet und ausgebildet ist zur Aufnahme von Geflügelkot.

3. Geflügelhaltungssystem (200) nach mindestens einem der vorhergehenden Ansprüche,
**dadurch gekennzeichnet, dass** auf einer dem Tieraufenthaltsbereich (12) abgewandten Seite des Untergurts (3) eine Seitenwand (2b) angeordnet ist.

4. Geflügelhaltungssystem (200) nach mindestens einem der vorhergehenden Ansprüche,
**dadurch gekennzeichnet, dass** unterhalb des Untergurts (3) ein Unterstützungselement (2a) angeordnet ist.

5. Geflügelhaltungssystem (200) nach mindestens einem der vorhergehenden Ansprüche 3 und 4, **dadurch gekennzeichnet, dass** die Seitenwand (2b) und/oder das Unterstützungselement (2a) und/oder der Aufenthaltsboden (2) miteinander verbunden und/oder einstückig ausgebildet sind.

6. Geflügelhaltungssystem (200) nach mindestens einem der vorhergehenden Ansprüche,
**dadurch gekennzeichnet, dass** der Untergurt (3) auf Höhe des Aufenthaltsbodens (2) oder darunter angeordnet ist.

7. Geflügelhaltungssystem (200) nach mindestens einem der vorhergehenden Ansprüche,
**dadurch gekennzeichnet, dass** ein Abstand in im Wesentlichen vertikaler Richtung zwischen dem Obergurt (4) und dem Untergurt (3) maximal einem Dreifachen eines durchschnittlichen Eidurchmessers entspricht, vorzugsweise maximal einem Doppelten eines durchschnittlichen Eidurchmesser.

8. Geflügelhaltungssystem (200) nach mindestens einem der vorhergehenden Ansprüche,
**dadurch gekennzeichnet, dass** oberhalb des Obergurts (4) ein Geflügelaufenthaltselement (5) angeordnet ist, wobei das Geflügelaufenthaltselement (5) zumindest abschnittsweise derart angeordnet und ausgebildet ist, dass Geflügelkot auf den Obergurt (4) gelangen kann.

9. Geflügelhaltungssystem (200) nach mindestens einem der vorhergehenden Ansprüche,
umfassend ein Leitelement (13), das ausgebildet und angeordnet ist, auf dem Untergurt (3) beförderte Eier (1) aus der Fördervorrichtung (100) heraus zu befördern.

10. Geflügelhaltungssystem (200) nach mindestens einem der vorhergehenden Ansprüche,
umfassend einen Zwischenförderer (140), der angeordnet und ausgebildet ist, aus der Fördervorrichtung (100) heraus beförderte Eier (1) aufzunehmen.

11. Geflügelhaltungssystem (200) nach Anspruch 10, **dadurch gekennzeichnet, dass**
- der Zwischenförderer (140) eine Förderrichtung aufweist, die im Wesentlichen parallel zur Untergurtförderrichtung (UFR) ist, und/oder.
- der Zwischenförderer (140) ein Zwischenförderband mit einem Obergurt (141) und einem Untergurt (142) aufweist und/oder als Stabförderer ausgebildet ist.

12. Geflügelhaltungssystem (200) nach Anspruch 11, **dadurch gekennzeichnet, dass**
- der Obergurt (141) des Zwischenförderers (140) im Wesentlichen auf gleicher Höhe angeordnet ist wie der Untergurt (3) der Fördervorrichtung (100), und/oder
- ein Abstand zwischen dem Zwischenförderer (140) und der Fördervorrichtung (100), vorzugsweise ein Abstand zwischen dem Obergurt (141) des Zwischenförderers (140) und dem Untergurt (3) der Fördervorrichtung (100), kleiner ist als ein durchschnittlicher Eidurchmesser, vorzugsweise kleiner als 50%, insbesondere kleiner als 20%, eines durchschnittlichen Eidurchmessers.

13. Geflügelhaltungssystem (200) nach mindestens einem der vorhergehenden Ansprüche,
**dadurch gekennzeichnet, dass** eine erste Seite des Förderbands, die eine Oberseite des Obergurts (3) bildet, anders ausgebildet ist als eine zweite Seite des Förderbands, die eine Oberseite des Untergurts (4) bildet.

14. Verfahren zur Förderung von Eiern (1) in einem Geflügelhaltungssystem, insbesondere in einem Geflügelhaltungssystem (200) nach mindestens einem der vorhergehenden Ansprüche, **gekennzeichnet durch**
- Fördern von Eiern (1) aus einem Tieraufenthaltsbereich (12) auf einem Untergurt (3) eines Förderbands einer Fördervorrichtung (100) in eine Untergurtförderrichtung (UFR),
- vorzugsweise Fördern von Geflügelkot auf einem Obergurt (4) eines Förderbands einer Fördervorrichtung in eine Obergurtförderrichtung (OFR).

15. Verwendung einer Fördervorrichtung (100) umfassend ein Förderband mit einem Obergurt (4) und einem Untergurt (3) zur Förderung von Eiern (1) in einem Geflügelhaltungssystem, insbesondere in einem Geflügelhaltungssystem (200) nach mindestens einem der vorhergehenden Ansprüche, **dadurch gekennzeichnet, dass** der Untergurt der Fördervorrichtung (100) angeordnet und ausgebildet ist zur Aufnahme von Eiern (1) aus einem Tieraufenthaltsbereich (12).

## Claims

1. Poultry management system (200), comprising:
- at least one animal holding area (12) with a holding area floor (2),
- a conveyor device (100) comprising a conveyor belt with an upper belt (4) and a lower belt (3),
- **characterised in that** the lower belt (3) is disposed and designed to receive eggs (1) from the animal holding area (12).

2. Poultry management system (200) as claimed in the preceding claim,
**characterised in that** the upper belt (4) is disposed and designed to receive poultry manure.

3. Poultry management system (200) as claimed in at least one of the preceding claims,
**characterised in that** a side wall (2b) is disposed on a side of the lower belt (3) facing away from the animal holding area (12).

4. Poultry management system (200) as claimed in at least one of the preceding claims,
**characterised in that** a support element (2a) is disposed underneath the lower belt (3).

5. Poultry management system (200) as claimed in at least one of preceding claims 3 and 4,
**characterised in that** the side wall (2b) and/or the support element (2a) and/or the holding area floor (2) are connected to one another and/or are of an integral design.

6. Poultry management system (200) as claimed in at least one of the preceding claims,
**characterised in that** the lower belt (3) is disposed at or below the height of the holding area floor (2).

7. Poultry management system (200) as claimed in at least one of the preceding claims,
**characterised in that** a distance in a substantially vertical direction between the upper belt (4) and the lower belt (3) corresponds to at most three times an average egg diameter, preferably at most twice an average egg diameter.

8. Poultry management system (200) as claimed in at least one of the preceding claims,
**characterised in that** a poultry holding element (5) is disposed above the upper belt (4), at least sections of the poultry holding element (5) being disposed and designed so that poultry manure can reach the upper belt (4).

9. Poultry management system (200) as claimed in at least one of the preceding claims,
comprising a guiding element (13) which is designed and disposed to transport eggs (1) transported on the lower belt (3) out of the conveyor device (100).

10. Poultry management system (200) as claimed in at least one of the preceding claims,
comprising an intermediate conveyor (140) which is disposed and designed to receive eggs (1) transported out of the conveyor device (100).

11. Poultry management system (200) as claimed in claim 10,
**characterised in that**
- the intermediate conveyor (140) has a transport direction which is substantially parallel with the lower belt transport direction (UFR) and/or
- the intermediate conveyor (140) has an intermediate conveyor belt with an upper belt (141) and a lower belt (142) and/or is provided as a rod conveyor.

12. Poultry management system (200) as claimed in claim 11,
**characterised in that**
- the upper belt (141) of the intermediate conveyor (140) is disposed at substantially the same height as the lower belt (3) of the conveyor device (100) and/or
- a distance between the intermediate conveyor (140) and the conveyor device (100), preferably a distance between the upper belt (141) of the intermediate conveyor (140) and the lower belt (3) of the conveyor device (100), is smaller than an average egg diameter, preferably smaller than 50%, in particular smaller than 20%, of an average egg diameter.

13. Poultry management system (200) as claimed in at least one of the preceding claims,
**characterised in that** a first side of the conveyor belt forming a top face of the upper belt (3) is of a different design from a second side of the conveyor belt forming a top face of the lower belt (4).

14. Method for transporting eggs (1) in a poultry management system, in particular in a poultry management system (200) as claimed in at least one of the preceding claims, **characterised by**
- transporting eggs (1) out of an animal holding area (12) on a lower belt (3) of a conveyor belt of a conveyor device (100) in a lower belt transport direction (UFR),
- preferably transporting poultry manure on an upper belt (4) of a conveyor belt of a conveyor device in an upper belt transport direction (OFR) .

15. Use of a conveyor device (100) comprising a conveyor belt with an upper belt (4) and a lower belt (3) for transporting eggs (1) in a poultry management system, in particular in a poultry management system (200) as claimed in at least one of the preceding claims, **characterised in that** the lower belt of the conveyor device (100) is disposed and designed to receive eggs (1) from an animal holding area (12).

## Revendications

1. Système de maintien de volaille (200), comprenant
- au moins une zone de séjour d'animaux (12) avec un sol de séjour (2),
- un dispositif de transport (100) comprenant un convoyeur avec une courroie supérieure (4) et une courroie inférieure (3),
- **caractérisé en ce que** la courroie inférieure (3) est agencée et réalisée pour la réception d'oeufs (1) de la zone de séjour d'animaux (12).

2. Système de maintien de volaille (200) selon la revendication précédente,
**caractérisé en ce que** la courroie supérieure (4) est agencée et réalisée pour la réception de déjections de volaille.

3. Système de maintien de volaille (200) selon au moins l'une quelconque des revendications précédentes,
**caractérisé en ce qu'**une paroi latérale (2b) est agencée sur un côté de la courroie inférieure (3) opposé à la zone de séjour d'animaux (12).

4. Système de maintien de volaille (200) selon au moins l'une quelconque des revendications précédentes,
**caractérisé en ce qu'**un élément de soutien (2a) est agencé en dessous de la courroie inférieure (3).

5. Système de maintien de volaille (200) selon au moins l'une quelconque des revendications 3 et 4 précédentes,
**caractérisé en ce que** la paroi latérale (2b) et/ou l'élément de soutien (2a) et/ou le sol de séjour (2) sont reliés l'un à l'autre et/ou réalisés d'un seul tenant.

6. Système de maintien de volaille (200) selon au moins l'une quelconque des revendications précédentes,
**caractérisé en ce que** la courroie inférieure (3) est agencée à hauteur du sol de séjour (2) ou en dessous.

7. Système de maintien de volaille (200) selon au moins l'une quelconque des revendications précédentes,
**caractérisé en ce qu'**une distance correspond dans le sens sensiblement vertical entre la courroie supérieure (4) et la courroie inférieure (3) au maximum à un triple d'un diamètre d'oeuf moyen, de préférence au maximum à un double d'un diamètre d'oeuf moyen.

8. Système de maintien de volaille (200) selon au moins l'une quelconque des revendications précédentes,
**caractérisé en ce qu'**un élément de séjour de volaille (5) est agencé au-dessus de la courroie supérieure (4), dans lequel l'élément de séjour de volaille (5) est agencé et réalisé au moins par section de sorte que les déjections de volaille puissent arriver sur la courroie supérieure (4).

9. Système de maintien de volaille (200) selon au moins l'une quelconque des revendications précédentes,
comprenant un élément conducteur (13), qui est réalisé et agencé pour transporter des oeufs (1) transportés sur la courroie inférieure (3) hors du dispositif de transport (100).

10. Système de maintien de volaille (200) selon au moins l'une quelconque des revendications précédentes,
comprenant un transporteur intermédiaire (140), qui est agencé et réalisé pour recevoir des oeufs (1) transportés hors du dispositif de transport (100).

11. Système de maintien de volaille (200) selon la revendication 10,
**caractérisé en ce que**
- le transporteur intermédiaire (140) présente un sens de transport, qui est sensiblement parallèle au sens de transport de la courroie inférieure (UFR), et/ou
- le transporteur intermédiaire (140) présente un convoyeur intermédiaire avec une courroie supérieure (141) et une courroie inférieure (142) et/ou est réalisé en tant que convoyeur à tige.

12. Système de maintien de volaille (200) selon la revendication 11,
**caractérisé en ce que**
- la courroie supérieure (141) du transporteur intermédiaire (140) est agencée sensiblement à la même hauteur que la courroie inférieure (3) du dispositif de transport (100), et/ou
- une distance entre le transporteur intermédiaire (140) et le dispositif de transport (100), de préférence une distance entre la courroie supérieure (141) du transporteur intermédiaire (140) et la courroie inférieure (3) du dispositif de transport (100), est inférieure à un diamètre d'oeuf moyen, de préférence inférieure à 50 %, en particulier inférieure à 20 %, d'un diamètre d'oeuf moyen.

13. Système de maintien de volaille (200) selon au moins l'une quelconque des revendications précédentes,
**caractérisé en ce qu'**un premier côté du convoyeur, qui forme un côté supérieur de la courroie supérieure (3), est réalisé autrement qu'un deuxième côté du convoyeur, qui forme un côté supérieur de la courroie inférieure (4).

14. Procédé de transport d'oeufs (1) dans un système de maintien de volaille, en particulier dans un système de maintien de volaille (200) selon au moins l'une quelconque des revendications précédentes, **caractérisé par**
- le transport d'oeufs (1) d'une zone de séjour d'animaux (12) sur une courroie inférieure (3) d'un convoyeur d'un dispositif de transport (100) dans un sens de transport de la courroie inférieure (UFR),
- de préférence le transport de déjections de volaille sur une courroie supérieure (4) d'un convoyeur d'un dispositif de transport dans un sens de transport de la courroie supérieure (OFR).

15. Utilisation d'un dispositif de transport (100) comprenant un convoyeur avec une courroie supérieure (4) et une courroie inférieure (3) pour le transport d'oeufs (1) dans un système de maintien de volaille, en particulier dans un système de maintien de volaille (200) selon au moins l'une quelconque des revendications précédentes, **caractérisée en ce que** la courroie inférieure du dispositif de transport (100) est agencée et/ou réalisée pour la réception d'oeufs (1) de la zone de séjour d'animaux (12).
